# EUROPÄISCHE PATENTSCHRIFT

(11) **EP 3 761 200 B1**
(45) Veröffentlichungstag und Bekanntmachung des Hinweises auf die Patenterteilung: **16.11.2022**
(21) Anmeldenummer: 20183017.1
(22) Anmeldetag: 30.06.2020
(51) Int. Cl.: G06F 21/54, G06F 21/82

(54) **VERFAHREN ZUM ENTSTÖREN EINES GERÄTS ÜBER EINE BENUTZERSCHNITTSTELLE DES GERÄTS**
METHOD FOR TROUBLESHOOTING A DEVICE VIA A USER INTERFACE OF THE DEVICE
PROCÉDÉ D'INTERFÉRENCE D'UN APPAREIL AU MOYEN D'UNE INTERFACE UTILISATEUR DE L'APPAREIL

(30) Priorität: 01.07.2019 DE 102019117658
(43) Veröffentlichungstag der Anmeldung: 06.01.2021
(73) Patentinhaber: Vaillant GmbH, 42859 Remscheid (DE)
(72) Erfinder: Maaß, Andre, 42369 Wuppertal (DE); von Dreden, Tim Christopher, 45257 Essen (DE)
(74) Vertreter: Popp, Carsten

(56) Entgegenhaltungen:
- EP-A2- 2 686 601
- Peter Huber Kältemaschinenbau Gmbh: "Operating Instructions: ministat 125/w, ministat 230/w, ministat 240/w", , 1. November 2003 (2003-11-01), XP055615433, Gefunden im Internet: URL:https://www.huber-online.com/download/ manuals/archive/Ministat_125_230_240_V2.2- 07_EN.pdf [gefunden am 2019-08-26]

## Beschreibung

Die Erfindung betrifft ein Verfahren zum Entstören eines Geräts über eine Benutzerschnittstelle des Geräts sowie ein entsprechendes Gerät, insbesondere Heizgerät. Das Verfahren kann insbesondere zur sicherheitsrelevanten Entstörung eines (Heiz-)Geräts über ein nicht sicherheitsrelevantes Benutzerinterface zum Einsatz kommen.

Moderne Heizgeräte, die zur Bedienung durch einen Benutzer eine kombinierte Anzeige- und Bedieneinrichtung, wie etwa ein sogenanntes Touch-Display aufweisen sind in der Regel in ein sicherheitsrelevantes System und ein nicht sicherheitsrelevantes System unterteilt. Dabei zählt zu dem sicherheitsrelevanten System üblicherweise das Betriebssteuersystem des Geräts, in welchem die für einen sicheren Betrieb des Geräts notwendigen Funktionen, Parameter, Limitierungen und dergleichen ablaufen bzw. hinterlegt sind. Zu dem nicht sicherheitsrelevanten System zählt normalerweise die Anzeige- und Bedieneinrichtung, die häufig als ein Zukaufteil mit eigener, nicht sicherheitsrelevanter Software in das Gerät integriert wird.

Kommt es in dem sicherheitsrelevanten System des Geräts zu einem Fehler, der einen weiteren sicheren Betrieb des Geräts gefährden könnte, liegt ein sogenannter sicherheitsrelevanter Störfall vor. Bei Vorliegen eines sicherheitsrelevanten Störfalls wird der reguläre Betrieb des Geräts deaktiviert bzw. das Gerät gesperrt. Das Gerät befindet sich dann in einem Zustand, der auch als sicherheitsrelevante Störung bezeichnet wird. Das Gerät bleibt in diesem Zustand, bis der Fehler behoben wurde und/oder eine sicherheitsrelevante Entstörung erfolgt.

An eine sicherheitsrelevante Entstörung werden jedoch vergleichsweise hohe Anforderungen gestellt. Beispielsweise soll vermieden werden, dass aufgrund eines Fehlers in der nicht sicherheitsrelevanten Software der Anzeige- und Bedieneinrichtung ein oder mehrere unbeabsichtigte Resets des sicherheitsrelevanten Systems erfolgen können. Somit ist es für eine sicherheitsrelevante Entstörung bisher üblich, dass die Benutzereingabe zur Entstörung direkt vom sicherheitsrelevanten System eingelesen und diesem über eine reine Hardwareschaltung ohne Einfluss von nicht sicherheitsrelevanter Software übermittelt wird.

Dies erfordert jedoch stets das Vorsehen mindestens einer reinen Hardwareschaltung in dem Gerät, auch wenn die sonstige Interaktion zwischen Gerät und Benutzer bereits vollständig über die Anzeige- und Bedieneinrichtung erfolgen kann. Ein Beispiel für eine häufig verwendete Hardwareschaltung ist ein separater Reset-Knopf mit dedizierter Leitung hin zu dem sicherheitsrelevanten System. Dies ist jedoch nachteilig für die Übersichtlichkeit und/oder Einfachheit der Bedienung des Geräts. Weiterhin ist zu berücksichtigen, dass die Möglichkeiten zur Entstörung über ein Bussystem durch Vorgaben beschränkt sind.

Aus der EP 2 686 601 A ist ein Verfahren zum Entstören eines Geräts über eine Benutzerschnittstelle bekannt.

Es ist daher Aufgabe der Erfindung, ein Verfahren sowie ein Gerät bereitzustellen, die jeweils zumindest dazu beitragen die Bedienung des Geräts zu vereinfachen und/oder übersichtlicher zu gestalten.

Diese Aufgabe wird gemäß den Merkmalen des Anspruchs 1 dadurch gelöst, dass ein Verfahren zum Entstören eines Geräts über eine Benutzerschnittstelle des Geräts bereitgestellt wird, umfassend zumindest folgende Schritte:
a) Empfangen eines von einer Anzeige- und Bedieneinrichtung des Geräts ausgesendeten Entstörsignals mittels einer Steuereinrichtung des Geräts,
b) Umwandeln des Entstörsignals mittels der Steuereinrichtung in ein Hardwaresignal,
c) Direktes Übermitteln des Hardwaresignals von der Steuereinrichtung an ein Betriebssteuersystem des Geräts,
d) Verifizieren des Entstörsignals durch eine Abfrage des Betriebssteuersystems an die Benutzerschnittstelle über eine Kommunikationseinrichtung des Geräts.

Vorteilhafte Ausgestaltungen ergeben sich durch die Merkmale der abhängigen Ansprüche.

Das Verfahren erlaubt in vorteilhafter Weise, dass eine sicherheitsrelevante Entstörung eines Geräts über eine nicht sicherheitsrelevante Benutzerschnittstelle des Geräts durchgeführt werden kann. Eine sicherheitsrelevante Entstörung ist üblicherweise dann erforderlich, wenn es in dem Betriebssteuersystem des Geräts zu einem Fehler gekommen ist, der einen weiteren sicheren Betrieb des Geräts gefährden könnte (sicherheitsrelevante Störung). Bei Vorliegen einer solchen sicherheitsrelevanten Störung wird der reguläre Betrieb des Geräts deaktiviert bzw. das Gerät gesperrt, bis eine sicherheitsrelevante Entstörung erfolgt ist.

Ein besonderer Vorteil dabei ist, dass die Benutzerschnittstelle, zu der auch die Anzeige- und Bedieneinrichtung gehören kann, nicht die Anforderungen an ein sicherheitsrelevantes System zu erfüllen braucht. Vielmehr kann die Benutzerschnittstelle mit (eigener) nicht sicherheitsrelevanter Software betrieben werden. Um trotzdem eine sicherheitsrelevante Entstörung über die nicht sicherheitsrelevante Benutzerschnittstelle durchführen zu können, wird hier in vorteilhafter Weise vorgeschlagen, eine (zusätzliche) Steuereinrichtung in dem Gerät vorzusehen, mit der ein von der Anzeige- und Bedieneinrichtung kommendes, nicht sicherheitsrelevantes Entstörsignal in ein Hardwaresignal umgewandelt werden kann. Zudem wird in besonders vorteilhafter Weise ein (zusätzlicher) Verifizierungsschritt durchgeführt, um das Hardwaresignal zu plausibilisieren.

In Schritt a) erfolgt ein Empfangen eines von einer Anzeige- und Bedieneinrichtung des Geräts ausgesendeten Entstörsignals mittels einer Steuereinrichtung des Geräts. Das Entstörsignal kann in diesem Zusammenhang beispielsweise von einer Komponente der Benutzerschnittstelle empfangen und (ggf. modifiziert und/oder verstärkt) an die Steuereinrichtung weitergeleitet werden oder direkt von der Steuereinrichtung empfangen werden. Insbesondere kann die Steuereinrichtung ein Bestandteil der Benutzerschnittstelle des Geräts sein. In diesem Zusammenhang kann die Steuereinrichtung beispielsweise in die Benutzerschnittstelle integriert sein. Denkbar ist jedoch auch, dass die Steuereinrichtung separat zu der Benutzerschnittstelle vorgesehen und gegebenenfalls mit dieser signaltechnisch verbunden ist.

Bei der Anzeige- und Bedieneinrichtung kann es sich beispielsweise um ein sogenanntes Touch-Display handeln. Insbesondere kann die Anzeige- und Bedieneinrichtung bestimmte Benutzereingaben, die über eine Berührung der Anzeige durch den Benutzer erfolgen, in bestimmte Ausgangssignale transformieren. So kann die Anzeige- und Bedieneinrichtung beispielsweise ein Entstörsignal ausgeben, wenn von einem Benutzer eine entsprechende Entstör-Schaltfläche auf der Anzeige der Anzeige- und Bedieneinrichtung berührt wird. Die Anzeige- und Bedieneinrichtung kann ein Bestandteil der Benutzerschnittstelle des Geräts sein. In diesem Zusammenhang kann die Anzeige- und Bedieneinrichtung beispielsweise in die Benutzerschnittstelle integriert sein. Denkbar ist jedoch auch, dass die Anzeige- und Bedieneinrichtung separat zu der Benutzerschnittstelle vorgesehen und gegebenenfalls mit dieser signaltechnisch verbunden ist.

In Schritt b) erfolgt ein Umwandeln des Entstörsignals mittels der Steuereinrichtung in ein Hardwaresignal. Insbesondere wandelt die Steuereinrichtung ein von einer nicht sicherheitsrelevanten Software generiertes Entstörsignal in eine Hardwaresignal zur sicherheitsrelevanten Entstörung eines sicherheitsrelevanten Betriebssteuersystems des Geräts um. Dadurch generiert die Steuereinrichtung das Hardwaresignal. Dabei kann die Steuereinrichtung beispielsweise ein digitales Signal und/oder Softwaresignal in ein Hardwaresignal umwandeln. Bei dem Hardwaresignal kann es sich beispielsweise um ein analoges Signal, ein elektrisches Spannungssignal und/oder ein elektrisches Stromsignal handeln. Das Hardwaresignal kann sich alternativ oder zusätzlich dadurch von anderen Signalen des Geräts unterscheiden, dass es über eine dedizierte Hardwareverbindung, wie etwa eine elektrische Leitung von der Steuereinrichtung zu dem Betriebssteuersystem übertragen wird. Beispielsweise kann die Steuereinrichtung ein über eine entsprechende elektrische Leitung übertragenes (analoges) Signal von "hoch" auf "tief" und umgekehrt umschalten. Bevorzugt wandelt die Steuereinrichtung ein bestimmtes (digitales) Ausgangssignal der Anzeige- und Bedieneinrichtung (Entstörsignal) in ein bestimmtes (analoges) Ausgangssignal der Steuereinrichtung bzw. Eingangssignal für das Betriebssteuersystem um.

In Schritt c) erfolgt ein direktes Übermitteln des Hardwaresignals von der Steuereinrichtung an ein Betriebssteuersystem des Geräts. Das direkte Übermitteln erfolgt insbesondere über eine dedizierte Verbindung, wie beispielsweise eine dedizierte elektrische Leitung (separates Kabel) zwischen der Steuereinrichtung und dem Betriebssteuersystem. Das direkte Übermitteln unterscheidet sich insbesondere von einem Übermitteln über eine Kommunikationseinrichtung, wie etwa ein Bussystem über die mehrere Endkomponenten bzw. Teilnehmer miteinander kommunizieren können.

In Schritt d) erfolgt ein Verifizieren des Entstörsignals durch eine Abfrage des Betriebssteuersystems an die Benutzerschnittstelle über eine Kommunikationseinrichtung des Geräts. Schritt d) dient insbesondere dazu, um abzufragen ob tatsächlich eine Benutzereingabe mit dem Ziel einer Entstörung erfolgt ist oder nicht (Touch-Reset plausibilisieren). Dadurch kann in vorteilhafter Weise geprüft werden, ob das Entstörsignal ungewollt (z.B. aufgrund eines Fehlers) von der Anzeige- und Bedieneinrichtung ausgesendet wurde. Beispielsweise kann das Verifizieren erfolgen, um abzufragen ob (unmittelbar) vor dem Ausgeben des (letzten) Entstörsignals eine Berührung einer Entstör-Schaltfläche auf der Anzeige der Anzeige- und Bedieneinrichtung erfolgte. Insbesondere wenn die Anzeige- und Bedieneinrichtung separat zu der Benutzerschnittstelle vorgesehen ist, kann die Benutzerschnittstelle in diesem Zusammenhang Informationen von der Anzeige- und Bedieneinrichtung einlesen, die eine entsprechende Verifizierung erlauben.

Nach einer vorteilhaften Ausgestaltung wird vorgeschlagen, dass es sich bei dem Gerät um ein Heizgerät handelt. Bei dem Heizgerät handelt es sich in der Regel um ein Gas- und/oder Ölheizgerät. Dies betrifft mit anderen Worten insbesondere ein Heizgerät, welches dazu eingerichtet ist, einen oder mehrere fossile Brennstoffe wie etwa Erdgas und/oder Erdöl, ggf. unter Zufuhr von Umgebungsluft aus einem Gebäude zu verbrennen, um Energie zur Erwärmung von beispielsweise Wasser zum Gebrauch in einer Wohnung zu erzeugen. Beispielsweise kann es sich bei dem Heizgerät um ein sogenanntes Gas-Brennwertgerät handeln. Das Heizgerät weist in der Regel zumindest einen Brenner und eine Fördereinrichtung wie etwa ein Gebläse auf, die ein Gemisch von Brennstoff (Gas) und Verbrennungsluft (durch einen Gemischkanal des Heizgeräts) zum Brenner fördert. Anschließend kann das durch die Verbrennung entstehende Abgas durch ein (internes) Abgasrohr des Heizgeräts zu eines Abgasanlage (eines Hauses) geführt werden. An dieser Abgasanlage sind in der Regel mehrere Heizgeräte angeschlossen.

Nach einer weiteren vorteilhaften Ausgestaltung wird vorgeschlagen, dass es sich bei der Steuereinrichtung um einen Mikrocontroller (Halbleiterchip) handelt. Der Mikrocontroller ist insbesondere dazu eingerichtet, ein Entstörsignal einzulesen, ein Hardwaresignal auszugeben und das Entstörsignal in das Hardwaresignal umzuwandeln. Dazu kann der Mikrocontroller beispielsweise einen entsprechenden Eingang, einen entsprechenden Ausgang, einen Prozessor und einen Speicher aufweisen. In dem Speichern können Funktionen und/oder Algorithmen hinterlegt sein, um das Entstörsignal in das Hardwaresignal umzuwandeln.

Nach einer weiteren vorteilhaften Ausgestaltung wird vorgeschlagen, dass es sich bei der Kommunikationseinrichtung um ein Bussystem handelt. Das Bussystem umfasst in der Regel mindestens einen Bus. Ein Bus bzw. Bussystem ist in diesem Zusammenhang ein System zur Datenübertragung zwischen mehreren Teilnehmern über einen gemeinsamen Übertragungsweg. Insbesondere sind zumindest die Benutzerschnittstelle und mindestens eine Komponente des Betriebssteuersystems an den Bus bzw. das Bussystem angeschlossen.

Erfindungsgemäß wird vorgeschlagen, dass bei dem direkten Übermitteln gemäß Schritt c) die Kommunikationseinrichtung umgangen wird. Insbesondere ist die Steuereinrichtung nicht an den Bus bzw. das Bussystem angeschlossen. Das direkte Übermitteln erfolgt insbesondere über eine dedizierte Verbindung, wie beispielsweise eine dedizierte elektrische Leitung (separates Kabel) zwischen der Steuereinrichtung und dem Betriebssteuersystem. Diese dedizierte Verbindung bildet in diesem Zusammenhang mit anderen Worten ausgedrückt einen "Bypass" um die Kommunikationseinrichtung.

Nach einer weiteren vorteilhaften Ausgestaltung wird vorgeschlagen, dass das Verifizieren gemäß Schritt d) folgende Zwischenschritte umfasst:
i) Übermitteln einer Anfrage-Nachricht von dem Betriebssteuersystem an die Benutzerschnittstelle über die Kommunikationseinrichtung,
ii) Übermitteln einer Antwort-Nachricht von der Benutzerschnittstelle an das Betriebssteuersystem,
wobei die Verifizierung erfolgreich ist, wenn das Betriebssteuersystem die (positive) Antwort-Nachricht innerhalb eines vorgegebenen Zeitfensters empfängt.

Das Zeitfenster kann beispielsweise mit dem Aussenden der Anfrage-Nachricht beginnen und nach einer vorgegebenen Dauer enden. Eine solche Verifizierung erlaubt in vorteilhafter Weise, dass eine zufällige Signalabgabe einer nicht sicherheitsrelevanten Komponente erkannt und ignoriert werden kann. Beispielsweise kann die Benutzerschnittstelle Informationen von der Anzeige- und Bedieneinrichtung einlesen, die es der Benutzerschnittstelle erlauben zu prüfen, ob der Benutzer (tatsächlich) eine Entstörung wünscht. In diesem Zusammenhang kann die Benutzerschnittstelle beispielsweise Informationen über die Berührungen der Anzeige der Anzeige- und Bedieneinrichtung einlesen, die einen Rückschluss darauf erlauben, ob der Benutzer eine Entstör-Schaltfläche auf der Anzeige der Anzeige- und Bedieneinrichtung berührt hat.

Alternativ oder zusätzlich zu der Verifizierung über das vorgegebene Zeitfenster kann vorgesehen sein, dass die Anfrage-Nachricht die Benutzerschnittstelle, insbesondere die Anzeige- und Bedieneinrichtung dazu veranlasst, eine Bestätigungseingabe (über die Anzeige- und Bedieneinrichtung) von dem Benutzer zu verlangen. In diesem Zusammenhang wird die (positive) Antwort-Nachricht (nur dann) gesendet, wenn der Benutzer die Entstörung bestätigt, beispielsweise durch ein erneutes Berühren der Entstör-Schaltfläche und/oder durch ein Berühren einer Bestätigungsschaltfläche auf der Anzeige der Anzeige- und Bedieneinrichtung. Die Verifizierung ist in diesem Zusammenhang dann erfolgreich, wenn das Betriebssteuersystem die Antwort-Nachricht überhaupt und/oder ggf. (bei Kombination der beiden Verifizierungsformen) innerhalb des vorgegebenen Zeitfensters empfängt.

Nach einer weiteren vorteilhaften Ausgestaltung wird vorgeschlagen, dass nach einer vorgegebenen Anzahl an vorhergehenden Entstörungen die Verifizierung eines weiteren Entstörsignals erfordert, dass ein Benutzer die (weitere) Entstörung über die Anzeige- und Bedieneinrichtung bestätigt. Auch in diesem Zusammenhang kann die Anfrage-Nachricht die Benutzerschnittstelle, insbesondere die Anzeige- und Bedieneinrichtung dazu veranlassen, eine Bestätigungseingabe von dem Benutzer zu verlangen.

Nach einer weiteren vorteilhaften Ausgestaltung wird vorgeschlagen, dass in einem Schritt e) eine Störung des Betriebssteuersystems des Geräts gelöscht wird, wenn in einem unmittelbar vorausgehenden Schritt d) die Verifizierung erfolgreich war. Nach dem Löschen kann das Gerät in den regulären Betriebsmodus zurückkehren. Zur Löschung der Störung können beispielsweise werksseitige Einstellungen des Betriebssteuersystem und/oder der Benutzerschnittstellt wiederhergestellt werden.

Eine besonders vorteilhafte Ausgestaltung kann wie folgt beschrieben werden: Das nicht sicherheitsrelevante Benutzerinterface (Benutzerschnittstelle) liest das Touchdisplay-Signal über einen Microcontroller ein, der die Eingabe in ein Hardwaresignal umwandelt, das vom sicherheitsrelevanten System (Betriebssteuersystem) eingelesen wird. Das sicherheitsrelevante System verifiziert die Eingabe über eine Nachricht über ein nicht sicherheitsrelevantes Bussystem an das Benutzerinterface. Das Benutzerinterface muss diese Nachricht in einem vorgegebenen Zeitfenster beantworten. Nach einer vorgegebenen Anzahl an vorhergehenden (beispielsweise nach fünf) Entstörungen muss (zusätzlich) eine (solche) zweite Nachricht (Antwort-Nachricht) durch das Benutzerinterface gesendet werden, deren Inhalt insbesondere zu den Daten der ersten Nachricht (Anfrage-Nachricht des Betriebssteuersystems) passen muss.

In diesem Zusammenhang kann beispielsweise bei der darauffolgenden bzw. weiteren (beispielsweise sechsten) Entstörung sich die (Anfrage-)Nachricht des Betriebssteuersystems an das Benutzerinterface insofern unterscheiden, dass eine zusätzliche Bestätigung des Benutzers angefordert wird und/oder (ggf. zusätzlich zu der Anforderung der Benutzerbestätigung) eine zufällige Zahl übermittelt wird. Nach der Bestätigung des Benutzers wird vom Benutzerinterface eine (positive) (Antwort-)Nachricht an das Betriebssteuersystem übermittelt. Damit diese Nachricht bzw. die Antwort-Nachricht vom Betriebssteuersystem akzeptiert wird, muss sie insbesondere zu den Daten (beispielhaft umfassend die zufällige Zahl) der ersten Nachricht (Anfrage-Nachricht) passen, wozu sie beispielsweise die binär invertierte Zufallszahl aus der ersten Nachricht enthalten kann.

Nach einem weiteren Aspekt wird die eingangs beschriebene Aufgabe auch durch ein Gerät mit einer Benutzerschnittstelle und einem Betriebssteuersystem gelöst, wobei die Benutzerschnittstelle und das Betriebssteuersystem über eine Kommunikationseinrichtung des Geräts miteinander kommunizieren können, und wobei das Gerät weiterhin eine Steuereinrichtung umfasst, die ein von einer Anzeige- und Bedieneinrichtung des Geräts ausgesendetes Entstörsignal in ein Hardwaresignal umwandeln und dieses direkt an das Betriebssteuersystem übermitteln kann, wobei Gerät zur Durchführung eines hier beschriebenen Verfahrens eingerichtet ist.

Die im Zusammenhang mit dem Verfahren erörterten Details, Merkmale und vorteilhaften Ausgestaltungen können entsprechend auch bei dem hier vorgestellten Gerät auftreten und umgekehrt. Insoweit wird auf die dortigen Ausführungen zur näheren Charakterisierung der Merkmale vollumfänglich Bezug genommen.

Die Erfindung wird nun anhand der Figuren detailliert erläutert. Es stellen dar:
- Figur 1:: schematisch einen beispielhaften Ablauf eines hier beschriebenen Verfahrens,
- Figur 2:: schematisch einen beispielhaften Aufbau eines hier beschriebenen Geräts,
- Figur 3:: schematisch einen weiteren beispielhaften Ablauf eines hier beschriebenen Verfahrens, und
- Figur 4:: schematisch einen weiteren beispielhaften Ablauf eines hier beschriebenen Verfahrens.

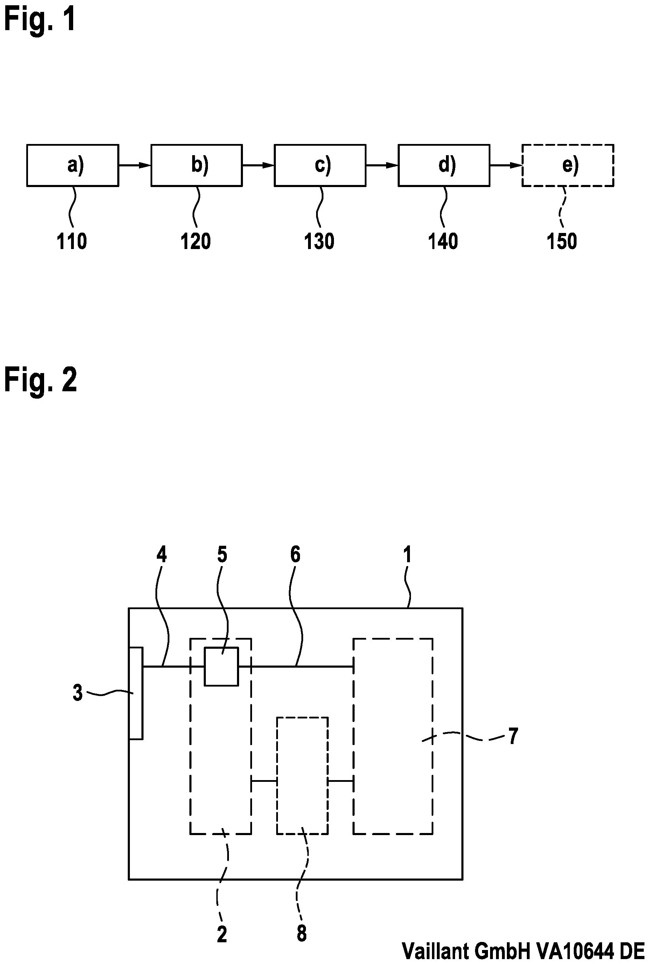

Figur 1 zeigt schematisch einen beispielhaften Ablauf eines hier beschriebenen Verfahrens. Das Verfahren dient zum Entstören eines Geräts 1 über eine Benutzerschnittstelle 2 des Geräts 1. Die mit den Blöcken 110, 120, 130, 140 und 150 gezeigte Reihenfolge der Schritte a), b), c) und d) sowie des optionalen Schritts e) stellt sich in der Regel bei einem üblichen Ablauf des Verfahrens ein.

In Block 110 erfolgt gemäß Schritt a) ein Empfangen eines von einer Anzeige- und Bedieneinrichtung 3 des Geräts 1 ausgesendeten Entstörsignals 4 mittels einer Steuereinrichtung 5 der Benutzerschnittstelle 2. In Block 120 erfolgt gemäß Schritt b) ein Umwandeln des Entstörsignals 4 mittels der Steuereinrichtung 5 in ein Hardwaresignal 6. In Block 130 erfolgt gemäß Schritt c) ein direktes Übermitteln des Hardwaresignals 6 von der Steuereinrichtung 5 an ein Betriebssteuersystem 7 des Geräts 1. In Block 140 erfolgt gemäß Schritt d) ein Verifizieren des Entstörsignals 4 durch eine Abfrage des Betriebssteuersystems 7 an die Benutzerschnittstelle 2 über eine Kommunikationseinrichtung 8 des Geräts 1.

In Block 150 kann darüber hinaus gemäß dem optionalen Schritt e) eine Störung des Betriebssteuersystems 7 des Geräts 1 gelöscht werden, wenn in einem unmittelbar vorausgehenden Schritt d) die Verifizierung erfolgreich war.

Figur 2 zeigt schematisch einen beispielhaften Aufbau eines hier beschriebenen Geräts 1. Das Gerät 1 weist eine Benutzerschnittstelle 2 und ein Betriebssteuersystem 7 auf. Die Benutzerschnittstelle 2 und das Betriebssteuersystem 7 können über eine Kommunikationseinrichtung 8 des Geräts 1 miteinander kommunizieren. Weiterhin umfasst das Gerät 2 eine Steuereinrichtung 5, die ein von einer Anzeige- und Bedieneinrichtung 3 des Geräts 1 ausgesendetes Entstörsignal 4 in ein Hardwaresignal 6 umwandeln und dieses direkt an das Betriebssteuersystem 7 übermitteln kann. Beispielhaft ist die Steuereinrichtung 5 hier in die Anzeige- und Bedieneinrichtung 3 integriert.

Das Gerät 1 ist beispielsweise zur Durchführung eines hier beschriebenen Verfahrens eingerichtet. Weiterhin handelt es sich hier beispielhaft bei dem Gerät 1 um ein Heizgerät, bei der Steuereinrichtung 5 um einen Mikrocontroller und bei der Kommunikationseinrichtung 8 um ein Bussystem. In Figur 2 ist zudem veranschaulicht, dass durch das direkte Übermitteln des Hardwaresignals 6 von der Steuereinrichtung 5 an ein Betriebssteuersystem 7 die Kommunikationseinrichtung 8 in vorteilhafter Weise umgangen wird.

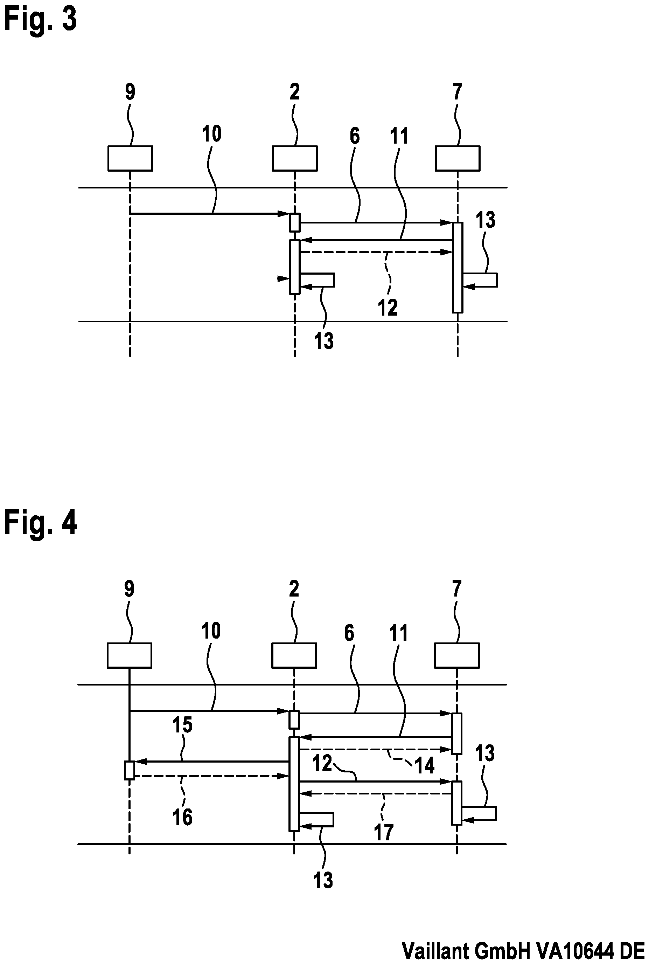

Figur 3 zeigt schematisch einen weiteren beispielhaften Ablauf eines hier beschriebenen Verfahrens. Hier tätigt ein Benutzer 9 eine Benutzereingabe 10 zur Entstörung. Die Benutzerschnittstelle 2 umfasst hier beispielhaft die Anzeige- und Bedieneinrichtung und die Steuereinrichtung. Auf die Benutzereingabe 10 hin sendet die Steuereinrichtung der Benutzerschnittstelle 2 das Hardwaresignal 6 and das Betriebssteuersystem 7.

Figur 3 zeigt in diesem Zusammenhang beispielhaft, dass das Verifizieren gemäß Schritt d) mindestens zwei Zwischenschritte umfassen kann, nämlich ein Übermitteln einer Anfrage-Nachricht 11 von dem Betriebssteuersystem 7 an die Benutzerschnittstelle 2 über die Kommunikationseinrichtung und ein Übermitteln einer Antwort-Nachricht 12 von der Benutzerschnittstelle 2 an das Betriebssteuersystem 7.

In diesem Zusammenhang ist die Verifizierung erfolgreich, wenn das Betriebssteuersystem 7 die (positive) Antwort-Nachricht 12 innerhalb eines vorgegebenen Zeitfensters empfängt. Nach der erfolgreichen Verifizierung erfolgen zur Beseitigung der Störung beispielhaft Wiederherstellungen 13 von werksseitigen Einstellungen des Betriebssteuersystems 7 und der Benutzerschnittstelle 2.

Figur 4 zeigt schematisch einen weiteren beispielhaften Ablauf eines hier beschriebenen Verfahrens. Dieser Ablauf kann sich nach einer vorgegebenen Anzahl (n) an vorhergehenden Entstörungen einstellen. Figur 4 zeigt somit beispielhaft den Ablauf für die weitere (n+1) Störung.

Figur 3 zeigt in diesem Zusammenhang beispielhaft, dass nach einer vorgegebenen Anzahl an vorhergehenden Entstörungen die Verifizierung eines weiteren Entstörsignals erfordern kann, dass ein Benutzer 9 die Entstörung über die Anzeige- und Bedieneinrichtung bestätigt. Hierzu sendet das Betriebssteuersystem 7 hier eine Anfrage-Nachricht 11, welche die Benutzerschnittstelle 2, insbesondere die Anzeige- und Bedieneinrichtung dazu veranlasst, eine Bestätigungseingabe von dem Benutzer 9 zu verlangen. Der Empfang eines solchen Anfrage-Nachricht 11 kann durch eine Bestätigungsnachricht 14 bestätigt werden.

Sodann richtet die Anzeige- und Bedieneinrichtung eine Benutzer-Anfrage 15 an den Benutzer 9, beispielsweise über eine entsprechende Aufforderung die Entstörung zu bestätigen. Die (positive) Benutzer-Antwort 16 leitet die Benutzerschnittstelle in Form der (positven) Antwort-Nachricht 12 an das Betriebssteuersystem 7 weiter. Dieses kann daraufhin ebenfalls eine Bestätigungsnachricht 14 zurücksenden, woraufhin seitens des Betriebssteuersystems 7 und seitens der Benutzerschnittstelle 2 eine Wiederherstellung 13 durchgeführt wird.

Weiterhin kann zum Beispiel auch vorgesehen sein, dass nach der vorgegebenen Anzahl an vorhergehenden (beispielsweise nach fünf) Entstörungen (alternativ oder zusätzlich zu der Benutzerbestätigung) der Inhalt der Antwort-Nachricht 12 zu den Daten der Anfrage-Nachricht 11 passen muss. Hierzu kann beispielsweise bei der darauffolgenden bzw. weiteren (beispielsweise sechsten) Entstörung sich die Anfrage-Nachricht 11 insofern unterscheiden, dass eine zusätzliche Bestätigung des Benutzers 9 (hier über die Benutzer-Anfrage 15) angefordert wird und eine zufällige Zahl (mit der Anfrage-Nachricht 11) übermittelt wird. Nach der Bestätigung des Benutzers 9 (Benutzer-Antwort 16) wird von der Benutzerschnittstelle eine Antwort-Nachricht 12 an das Betriebssteuersystem 7 übermittelt. Damit diese Nachricht vom Betriebssteuersystem 7 akzeptiert wird, muss sie in diesem Beispiel zu den Daten (beispielhaft umfassend die zufällige Zahl) der Anfrage-Nachricht 11 passen, wozu sie beispielsweise die binär invertierte Zufallszahl aus der Anfrage-Nachricht 11 enthalten kann.

### Bezugszeichenliste

- 1: Gerät
- 2: Benutzerschnittstelle
- 3: Anzeige- und Bedieneinrichtung
- 4: Entstörsignal
- 5: Steuereinrichtung
- 6: Hardwaresignal
- 7: Betriebssteuersystem
- 8: Kommunikationseinrichtung
- 9: Benutzer
- 10: Benutzereingabe
- 11: Anfrage-Nachricht
- 12: Antwort-Nachricht
- 13: Wiederherstellung
- 14: Bestätigungsnachricht
- 15: Benutzer-Anfrage
- 16: Benutzer-Antwort
- 17: Bestätigungsnachricht

## Patentansprüche

1. Verfahren zum Entstören eines Geräts (1) über eine Benutzerschnittstelle (2) des Geräts (1), umfassend zumindest folgende Schritte:
a) Empfangen eines von einer Anzeige- und Bedieneinrichtung (3) des Geräts (1) ausgesendeten Entstörsignals (4) mittels einer Steuereinrichtung (5) des Geräts (1),
b) Umwandeln des Entstörsignals (4) mittels der Steuereinrichtung (5) in ein Hardwaresignal (6),
c) Direktes Übermitteln des Hardwaresignals (6) von der Steuereinrichtung (5) an ein Betriebssteuersystem (7) des Geräts (1),
d) Verifizieren des Entstörsignals (4) durch eine Abfrage des Betriebssteuersystems (7) an die Benutzerschnittstelle (2) über eine Kommunikationseinrichtung (8) des Geräts (1);
wobei bei dem direkten Übermitteln gemäß Schritt c) die Kommunikationseinrichtung (8) umgangen wird.

2. Verfahren nach Anspruch 1, wobei es sich bei dem Gerät (1) um ein Heizgerät handelt.

3. Verfahren nach Anspruch 1 oder 2, wobei es sich bei der Steuereinrichtung (5) um einen Mikrocontroller handelt.

4. Verfahren nach einem der vorhergehenden Ansprüche, wobei es sich bei der Kommunikationseinrichtung (8) um ein Bussystem handelt.

5. Verfahren nach einem der vorhergehenden Ansprüche, wobei das Verifizieren gemäß Schritt d) folgende Zwischenschritte umfasst:
i) Übermitteln einer Anfrage-Nachricht (11) von dem Betriebssteuersystem (7) an die Benutzerschnittstelle (2) über die Kommunikationseinrichtung (8),
ii) Übermitteln einer Antwort-Nachricht (12) von der Benutzerschnittstelle (2) an das Betriebssteuersystem (7),
wobei die Verifizierung erfolgreich ist, wenn das Betriebssteuersystem (7) die Antwort-Nachricht (12) innerhalb eines vorgegebenen Zeitfensters empfängt.

6. Verfahren nach Anspruch 5, wobei nach einer vorgegebenen Anzahl an vorhergehenden Entstörungen die Verifizierung eines weiteren Entstörsignals (4) erfordert, dass ein Benutzer (9) die Entstörung über die Anzeige- und Bedieneinrichtung (3) bestätigt.

7. Verfahren nach einem der vorhergehenden Ansprüche, wobei in einem Schritt e) eine Störung des Betriebssteuersystems (7) des Geräts (1) gelöscht wird, wenn in einem unmittelbar vorausgehenden Schritt d) die Verifizierung erfolgreich war.

8. Gerät (1) mit einer Benutzerschnittstelle (2) und einem Betriebssteuersystem (7), wobei die Benutzerschnittstelle (2) und das Betriebssteuersystem (7) über eine Kommunikationseinrichtung (8) des Geräts (1) miteinander kommunizieren können, und wobei das Gerät (1) weiterhin eine Steuereinrichtung (5) umfasst, die ein von einer Anzeige- und Bedieneinrichtung (3) des Geräts (1) ausgesendetes Entstörsignal (4) in ein Hardwaresignal (6) umwandeln und dieses direkt an das Betriebssteuersystem (7) übermitteln kann, und wobei das Gerät (1) zur Durchführung eines Verfahrens nach einem der Ansprüche 1 bis 7 eingerichtet ist.

## Claims

1. Method for troubleshooting a device (1) via a user interface (2) of the device (1), comprising at least the following steps:
a) receiving a troubleshooting signal (4) output by a display and operating unit (3) of the device (1) by means of a control unit (5) of the device (1),
b) converting the troubleshooting signal (4) into a hardware signal (6) by means of the control unit (5),
c) direct transmission of the hardware signal (6) from the control unit (5) to an operation control system (7) of the device (1),
d) verifying the troubleshooting signal (4) by interrogating the operation control system (7) at the user interface (2) via a communication unit (8) of the device (1); wherein the direct transmission according to step c) bypasses the communication unit (8).

2. Method according to claim 1, wherein the device (1) is a heating device.

3. Method according to claim 1 or 2, wherein the control unit (5) is a microcontroller.

4. Method according to any one of the preceding claims, wherein the communication unit (8) is a bus system.

5. Method according to any one of the preceding claims, wherein the verifying according to step d) comprises the following intermediate steps:
i) transmitting a request message (11) from the operation control system (7) to the user interface (2) via the communication unit (8),
ii) transmitting a response message (12) from the user interface (2) to the operation control unit (7), wherein the verification is successful if the operation control unit (7) receives the response message (12) within a specified time window.

6. Method according to claim 5, wherein, after a specified number of previous troubleshootings, the verification of a further troubleshooting signal (4) requires that a user (9) confirms the troubleshooting via the display and control unit (3).

7. Method according to any one of the preceding claims, wherein in a step e) a fault of the operation control system (7) of the device (1) is cleared if in an immediately preceding step d) the verification was successful.

8. Device (1) comprising a user interface (2) and an operation control system (7), wherein the user interface (2) and the operation control system (7) can communicate with each other via a communication unit (8) of the device (1), and wherein the device (1) further comprises a control unit (5), which can convert a troubleshooting signal (4) output by a display and operating unit (3) of the device (1) into a hardware signal (6) and transmit this directly to the operation control system (7), and wherein the device (1) is adapted to carry out a method according to any one of claims 1 to 7.

## Revendications

1. Procédé d'interférence d'un appareil (1) par l'intermédiaire d'une interface utilisateur (2) de l'appareil (1), comprenant au moins les étapes suivantes :
a) Réception d'un signal d'interférence (4) émis par un dispositif d'affichage et de service (3) de l'appareil (1) au moyen d'un dispositif de commande (5) de l'appareil (1),
b) Conversion du signal d'interférence (4) en un signal matériel (6) au moyen du dispositif de commande (5),
c) Transmission directe du signal matériel (6) du dispositif de commande (5) à un système de commande de service (7) de l'appareil (1),
d) Vérification du signal d'interférence (4) par une interrogation du système de commande de service (7) adressée à l'interface utilisateur (2) via un dispositif de communication (8) de l'appareil (1) ;
dans lequel lors de la transmission directe selon l'étape c), le dispositif de communication (8) est contourné.

2. Procédé selon la revendication 1, dans lequel il s'agit pour l'appareil (1) d'un appareil de chauffage.

3. Procédé selon la revendication 1 ou 2, dans lequel il s'agit pour le dispositif de commande (5) d'un microcontrôleur.

4. Procédé selon l'une quelconque des revendications précédentes, dans lequel il s'agit pour le dispositif de communication (8) d'un système de bus.

5. Procédé selon l'une quelconque des revendications précédentes, dans lequel la vérification selon l'étape d) comprend les étapes intermédiaires suivantes :
i) Transmission d'un message de demande (11) du système de commande de service (7) à l'interface utilisateur (2) via le dispositif de communication (8),
ii) Transmission d'un message de réponse (12) de l'interface utilisateur (2) au système de commande de service (7), dans lequel la vérification est réussie si le système de commande de service (7) reçoit le message de réponse (12) à l'intérieur d'une fenêtre temporelle définie.

6. Procédé selon la revendication 5, dans lequel après un nombre défini d'interférences préalables, la vérification d'un autre signal d'interférence (4) nécessite qu'un utilisateur (9) confirme l'interférence via le dispositif d'affichage et de service (3).

7. Procédé selon l'une quelconque des revendications précédentes, dans lequel dans une étape e) une panne du système de commande de service (7) de l'appareil (1) est effacée si la vérification est réussie dans une étape d) directement antérieure.

8. Appareil (1) équipé d'une interface utilisateur (2) et d'un système de commande de service (7), dans lequel l'interface utilisateur (2) et le système de commande de service (7) peuvent communiquer entre eux via un dispositif de communication (8) de l'appareil (1), et dans lequel l'appareil (1) comprend de plus un dispositif de commande (5) qui peut convertir un signal d'interférence (4) émis par un dispositif d'affichage et de service (3) de l'appareil (1) en un signal matériel (6) et peut transmettre celui-ci directement au système de commande de service (7), et dans lequel l'appareil (1) est agencé pour la réalisation d'un procédé selon l'une des revendications 1 à 7.
